Europäisches Patentamt

European Patent Office

Office européen des brevets

(11) Veröffentlichungsnummer: **0 209 026**
A2

(12) **EUROPÄISCHE PATENTANMELDUNG**

(21) Anmeldenummer: **86109193.2**

(22) Anmeldetag: **05.07.86**

(51) Int. Cl.⁴: **A 01 D 25/02**

(30) Priorität: **13.07.85 DE 3525087**
**30.07.85 DE 3527188**

(43) Veröffentlichungstag der Anmeldung: **21.01.87**
**Patentblatt 87/4**

(84) Benannte Vertragsstaaten: **BE DE FR GB IT LU NL**

(71) Anmelder: **Hendlmeier, Konrad, Ehweg 1,
D-8401 Untersanding (DE)**

(72) Erfinder: **Hendlmeier, Konrad, Ehweg 1,
D-8401 Untersanding (DE)**

(74) Vertreter: **Wasmeier, Alfons, Dipl.-Ing. et al,
Patentanwälte Dipl.-Ing. A.Wasmeier Dipl.-Ing. H.Graf
Postfach 382 Greflinger Strasse 7,
D-8400 Regensburg 1 (DE)**

(54) **Rodevorrichtung für Rübenerntemaschinen.**

(57) Bei einem Rodewerkzeug bestehen die die Rüben im Erdreich lockernden stabförmigen Rodeelemente aus einem zur Horizontalen nach abwärts geneigten, einem zur vertikalen Längsmittenebene gespreizten und einem nach hinten ansteigenden Abschnitt. Im Bereich der tiefsten Stelle der Rodeelemente ist jeweils eine in der Ebene des jeweiligen Stabelementes angeordnete, im wesentlichen dreieckförmige Druckplatte mit dem jeweiligen Rodeelement befestigt.

## Rodevorrichtung für Rübenerntemaschinen.

Die Erfindung bezieht sich auf das maschinelle Roden von Rüben oder dergl. landwirtschaftlichen Wurzelfrüchten, d.h. zum Lockern und Ausheben von Rüben aus dem Erdboden, nach dem Oberbegriff des Anspruches 1.

Bei derartigen Maschinen ist die Rodevorrichtung in der Regel in Form von sogenannten Polderscharen ausgebildet; hierbei sind zwei zueinander im Winkel zur Horizontalen und Vertikalen angeordnete Flächenschare mit einer Höhe zwischen 7 und 14 cm so zwischen Köpfvorrichtung und Reinigungsvorrichtung zu beiden Seiten einer Rübenreihe angeordnet, daß sie einen Einlaufabstand von ca. 28 cm und einen Auslaufabstand von ca. 2 cm besitzen, vom Einlauf zum Auslauf abfallen und von unten nach oben zur Vertikalen sich erweitern. Die Rüben werden somit seitlich zusammen mit der umgebenden Erde eingeklemmt und in einer durch die beiden einander zugeordneten Schare gebildeten schiefen Ebene nach oben aus dem Erdreich gepreßt und von der Reinigungsvorrichtung, z.B. dem Siebstern abgenommen. Diese Vorrichtung bzw. diese Methode des Rodens hat einen ganz entscheidenden Nachteil, der in der Praxis mangels besserer Lösungen bisher in Kauf genommen werden mußte. Das von den am Einlauf einen breiten Abstand voneinander aufweisenden Scharen aufgenommene Erdreich, das die Rübe umgibt, wird in dem durch die Schare gebildeten, sich nach hinten stark verengenden Kanal außerordentlich hoch verdichtet, so daß die Rübe bei der Übergabe auf den Siebstern mit stark verdichteter Erdschicht versehen ist, die sich in der Reinigungsvorrichtung nicht löst, so daß die Rüben mit einem hohen Erdanteil in der Fabrik angeliefert werden und dort auf kostspielige Art gereinigt werden müssen. Der Anfall an Erdreich bei den Zuckerfabriken aufgrund dieses an den Rüben anhaftenden verdichteten Erdreiches ist relativ hoch (je nach Witterung beträgt der Verschmutzungsgrad zwischen 10 und 40% der Rübenmasse). Zwar wurde versucht, in Reinigungsvorrichtungen der Rübenerntemaschinen diesen Erdanteil zu vermindern

bzw. zu beseitigen, z.B. indem starke Vibratoren eingesetzt wurden, die Rüben gegen eine Wand geschleudert wurden, die Rüben gegeneinander, z.B. unter Zwischenschaltung von Kugeln zu Reinigungszwecken gerieben wurden, die Rüben mit Stahlbürsten gereinigt wurden usw.. Das an den Rüben haftende verdichtete Erdreich läßt sich jedoch mit all diesen teils sehr aufwendigen Methoden nicht oder nur ungenügend von den Rüben lösen.

Es sind ferner Rübenrodekörper bekannt (DE-GM 1.853.839), in denen eine aus zwei nach vorne gespreizten und geneigt angeordneten, zweckmäßig mit auswechselbaren Spitzen versehenen Zinken bestehende Rodegabel verwendet wird. Diese Rodegabel ist hinten geschlossen; alternativ können die beiden Zinken im hinteren Teil durch einen Steg miteinander verbunden sein, um die beim Roden auftretenden Spreizkräfte aufzunehmen. Ein derartiger Rübenrodekörper neigt häufig zu Verstopfungen des Rodekörpers und zum seitlichen Ausbrechen gerodeter Rüben. Um dieses Verstopfen des Rodekörpers durch Rübenblätter oder dergl. zu verhindern, wird nach dem DE-GM 1.853.839 vorgeschlagen, die Rodegabel des Rodekörpers aus zwei Zinken herzustellen, die nicht unmittelbar miteinander verbunden sind, und dem Rodekörper weiterhin seitlich vorzugsweise freilaufend gelagerte Scheibensechs zuzuordnen, die die Verstopfungsgefahr ausschalten sollen. Anstelle der aus zwei Zinken bestehenden Rodegabel wird bei dem DE-GM 1.853.839 als äquivalente Maßnahme angegeben, ein Polderschar zu verwenden, bei dem die eingangs geschilderten Nachteile in Kauf genommen werden müssen.

Aufgabe der Erfindung ist es demgegenüber, eine maschinelle Vorrichtung zu schaffen, mit deren Hilfe das Roden von Rüben so vorgenommen werden kann, daß an den gerodeten Rüben nur ein geringer Erdanteil haftet und daß insbes. eine Verdichtung des Erdreiches im Bereich der zu rodenden Rüben durch die Rodeelemente am Rübenkörper weitgehend ausgeschaltet wird, andererseits für den Vorgang des Lockerns und Aushebens der Rüben aus dem Erdboden im Wurzelbereich der Rüben eine für das Ausheben förderliche Erdverdichtung und eine dünne, zwischen Rübenoberfläche und Rodewerkzeug zur Vermeidung der Beschädigung der Rüben notwendige bzw. zweckmäßige Erdschicht erzielt wird.

Dies wird gemäß der Erfindung mit den Merkmalen des Kennzeichens des Anspruches 1 erreicht. Weitere Ausgestaltungen der Erfindung sind Gegenstand der Unteransprüche.

Vorliegende Erfindung beruht auf der grundlegenden Erkenntnis, daß das starke Haften des Erdreiches an den gerodeten Rüben dadurch bedingt ist, daß durch die Polderschare beim Roden das Erdreich um die jeweilige Rübe herum außerordentlich stark verdichtet wird, so daß es durch auf dem Feld an Ort und Stelle einsetzbare Reinigungsmethoden und Reinigungsvorrichtungen nicht von den Rüben gelöst werden kann. Die Verdichtung des Erdreiches um die Rüben herum ergibt sich daraus, daß die Polderschare einen in Bewegungsrichtung V-förmigen Kanal bilden, dessen Seitenwände massiv sind und das Erdreich nicht durchlassen, so daß der am eintrittsseitigen Ende große Querschnitt in einen austrittsseitig sehr kleinen Querschnitt übergeht und zumindest der wesentliche Teil des Erdreiches diesen Kanal am schmalen Ende wieder verlassen muß. Dies ist nur dadurch möglich, daß das Volumen des Erdreiches stark komprimiert wird, so daß das austretende Erdreich erheblich verdichtet ist. Das Erdreich haftet an der gesamten Oberfläche der Rübe an, wobei die Rübe zusammen mit einem Teil des verdichteten Erdreichs von den Scharen angehoben und auf den Siebstern übergeben wird.

Bei Verwendung eines stabförmigen Rodewerkzeuges nach der Erfindung ist die Seitenbegrenzung linienförmig, da die stabförmigen Elemente, die als Rodeelemente verwendet werden, die Rüben nur mit einem Linienkontakt erfassen und durch die Form der Stäbe anheben. Bei einer Vorrichtung nach der DE-OS 32 37 249 hat die Praxis jedoch ergeben, daß die Menge des zwischen Rübenoberfläche und Rodewerkzeug befindlichen Erdreiches so gering ist, daß ein Schutz der Rüben durch das Erdreich an den Stellen, an denen die stabförmigen Rodeelemente mit der Rübenoberfläche in Eingriff kommen, nicht mehr

ausreichend ist, und deshalb das Metall der stabförmigen Rodeelemente beim Ausheben der Rüben direkt in Kontakt mit dem Rübenkörper kommt und ein Teil der Rüben beschädigt wird.

Die gemäß der Erfindung im Bereich der tiefsten Stelle der Rodeelemente vorgesehenen beiden miteinander zusammenwirkenden, etwa dreieckförmigen Druckplatten ergeben in Verbindung mit den stabförmigen Rodeelementen, daß an den gerodeten Rüben nur sehr wenig Erdreich anhaftet, daß insbes. dieses Erdreich an der Eingriffsstelle der Rodeelemente mit dem Rübenkörper nur in geringem Maße verdichtet und das Erdreich damit in der Reinigungsvorrichtung der Maschine leicht entfernt werden kann, so daß saubere Rüben geliefert werden und der Aufwand für die Reinigung der Rüben minimal ist; andererseits wird durch die beiden miteinander zusammenwirkenden, im Bereich der tiefsten Stelle der Rodeelemente vorhandenen beiden Druckplatten erreicht, daß an der Stelle, an der die Rodeelemente mit dem Rübenkörper in Eingriff kommen, eine gewisse, ausreichende Menge an Erdreich vorhanden ist, die verhindert, daß die Rodeelemente aus Metall direkt mit dem Rübenkörper in Eingriff kommen und diesen beschädigen. Es tritt im untersten Bereich der Rodeelemente durch die Wirkung der Druckplatten durch die aufeinander zu verlaufenden Rodeelemente und die im untersten Bereich dem Verlauf der Rodeelemente angepaßten und in einer Ebene mit den Rodeelementen liegenden Druckplatten eine gewisse Erdverdichtung auf, so daß die beiden Innenflächen der Druckplatten zwischen sich das aufgenommene Erdreich zwischen der breiteren Einlaufstelle und der schmaleren Auslaufstelle verdichten und an den Innenflächen der Druckplatten, zusammen mit der auszuhebenden Rübe, nach oben drücken und  bewegen. Die Verdichtung des Erdreiches erfolgt dabei nur im Wurzelbereich der Rüben, so daß das verdichtete Erdreich auch nur in diesem Bereich an der Rübe anhaftet; die Wurzeln der Rüben werden jedoch beim Transport, bei Reinigungsvorgängen und dergl. Behandlung in der Regel von selbst abgebrochen, so daß das verdichtete, mit den Rübenwurzeln verbundene Erdreich sich im Laufe der weiteren Behandlung der Rüben selbst von dem eigentlichen Rübenkörper löst.

Mit der erfindungsgemäßen Vorrichtung wird erreicht, daß an den gerodeten Rüben nur sehr wenig Erdreich anhaftet, daß insbes. dieses Erdreich nur im untersten Abschnitt der Rodeelemente des Rodewerkzeuges an den Druckplatten verdichtet wird, daß das wenige, an den Rüben anhaftende Erdreich in der Reinigungsvorrichtung der Maschine leicht entfernt werden kann, so daß saubere Rüben angeliefert werden und der Aufwand für die Reinigung der Rüben minimal ist. Des weiteren ist von ausschlaggebender Bedeutung, daß der Kraftaufwand für das Roden mit der erfindungsgemäßen Vorrichtung erheblich geringer ist, weil die Kontaktfläche der Rodevorrichtung mit dem Erdreich gering ist, während bei einem Roden mit Polderscharen ein erheblicher Energieaufwand dazu benötigt wird, das Erdreich zwischen den Polderscharen und den Rüben zu verdichten. Die wesentlich geringere Losreißkraft für das Roden mit der erfindungsgemäßen Vorrichtung ist auch dadurch bedingt, daß lediglich der Durchmesser des Stabes und die Flächen der kleinen Druckplatten als Widerstand beim Durchfahren des Erdreiches auftritt, und daß an der Einlaufseite die beiden Stabelemente zu beiden Seiten der Rübe unterhalb des unteren Drittels der Rübe, also am Übergang des Rübenschwanzes in den Rübenkörper, angreifen, und durch die Neigung der Stäbe und durch die Preßkraft, die durch die Bodenverdichtung an den Druckplatten auftritt, die Rübe aus dem Erdreich aushebt. Ein wesentlicher Vorteil der erfindungsgemäßen Vorrichtung gegenüber den Polderscharen besteht ferner darin, daß der Verschleiß der Rodeelemente wesentlich geringer ist, daß diese Rodeelemente mit erheblich niedrigeren Kosten hergestellt werden können und daß aufgrund des geringen Kostenaufwandes zum Roden in Verbindung mit dem wesentlich geringeren Widerstand, den die Rodeelemente und die Druckplatten nach der Erfindung dem Erdreich entgegensetzen, die Rodegeschwindigkeit höher gewählt werden kann als bei Verwendung von Polderscharen.

Die Druckplatten sind in der Ebene der jeweiligen Stabelemente angeordnet und entweder mit den Stabelementen verschweißt oder einstückig in Verbindung mit den Stabelementen herge-

stellt. Vorzugsweise haben diese Druckplatten eine Dreieck-form, wobei die beiden Schenkel des Dreieckes an den beiden aneinander anschließenden Abschnitten der jeweiligen Stabelemente in deren unterstem Bereich befestigt sind.

Bei einer abgeänderten Ausführungsform der Erfindung weisen die stabförmigen Elemente an der untersten Stelle einen etwa horizontal verlaufenden Abschnitt auf, und jede Druckplatte ist mit einem dieser etwa horizontal verlaufenden Abschnitte so befestigt, daß die Druckplatte von den jeweiligen Rodeelementen nach unten vorsteht. Das Einlaufende dieser Druckplatten ist dabei vorteilhafterweise nach vorne außen so aufgebogen bzw. gewölbt ausgebildet, daß die Einlauföffnung vergrößert wird, um sicherzustellen, daß die Rübe ohne Beschädigung in den Spalt zwischen den beiden miteinander zusammenwirkenden Rodeelementen eingeführt werden kann. Um eine Beschädigung der Rüben zu verhindern, wenn das Rodewerkzeug die Rüben zwischen den beiden zusammenwirkenden Rodeelementen aufnimmt, sind die Druckplatten an den stabförmigen Rodeelementen auf deren einander zugewandten Flächen befestigt.

Nachstehend wird die Erfindung in Verbindung mit der Zeichnung anhand von Ausführungsbeispielen erläutert. Es zeigt:

Fig. 1 eine schematische Darstellung des Rodevorganges mit einer bekannten Vorrichtung, im Schnitt,

Fig. 2 eine schematische Darstellung des Rodevorganges mit der erfindungsgemäßen Vorrichtung, im Schnitt,

Fig. 3 eine Vorderansicht der erfindungsgemäßen Vorrichtung in schematischer Darstellung,

Fig. 4 eine Aufsicht auf die erfindungsgemäße Rodevorrichtung in schematischer Darstellung,

Fig. 5 eine Seitenansicht der Rodevorrichtung nach der Erfindung in schematischer Darstellung,

Fig. 6 in vergrößerter Darstellung eine Ausführungsform eines Rodeelementes mit Druckplatte,

Fig. 7 eine andere Ausführungsform des Rodeelementes nach der Erfindung mit sich nach unten anschließender Druck-platte,

BAD ORIGINAL

Fig. 8 eine schematische Seitenansicht einer Druckplatte nach der Erfindung,

Fig. 9 eine schematische Vorderansicht zweier benachbarter Druckplatten nach Fig. 7,

Fig. 10 eine perspektivische Ansicht der erfindungsgemäßen Rodevorrichtung,

Fig. 11 und 12 zwei Ausführungsformen von einander zugeordneten Druckplatten, die auf unterschiedliche Weise miteinander fest verbunden sind,

Fig. 13 eine weitere praktische Ausführungsform der Erfindung in Aufsicht,

Fig. 14 eine Seitenansicht einer Hälfte der Vorrichtung nach Fig. 13,

Fig. 15 eine schematische Aufsicht auf die Anordnung aus Leitstäben, und

Fig. 16 eine Seitenansicht der Leitstäbeanordnung nach Fig. 15.

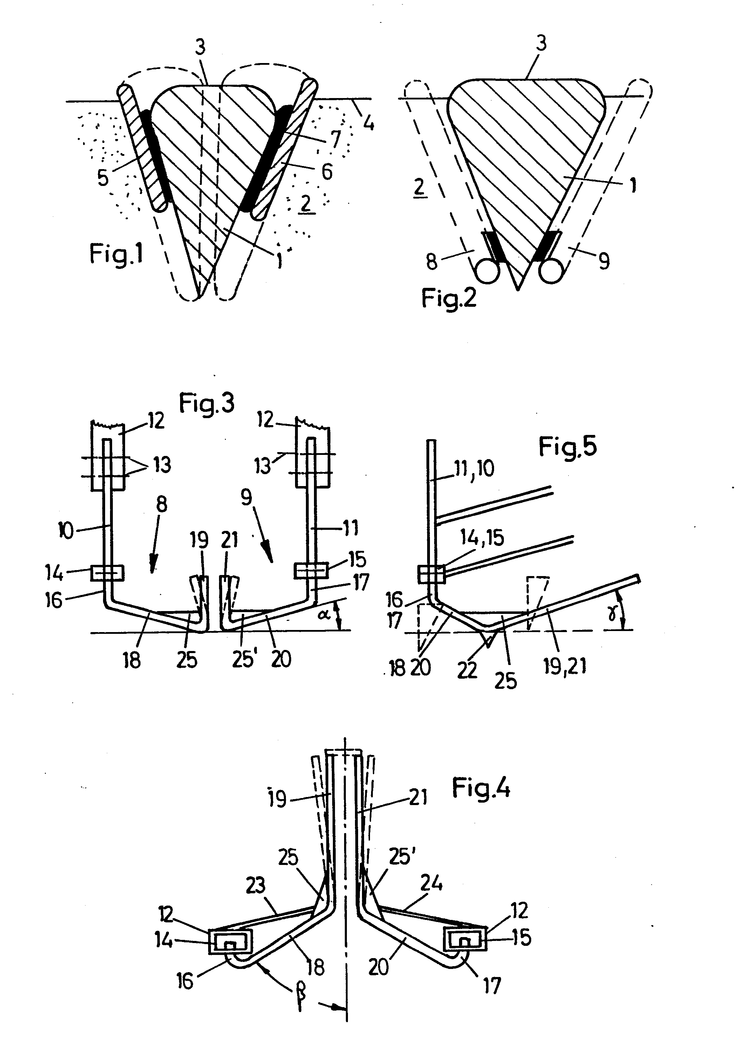

Die in den Figuren 1 und 2 mit 1 bezeichnete Rübe sitzt im Erdreich 2. Sie ist, wie mit 3 angedeutet, geköpft dargestellt; die Bodenoberfläche ist mit 4 bezeichnet. Mit 5 und 6 sind die beiden Polderschare eines bekannten Rodeaggregates bezeichnet, die die massiven Seiten eines Kanales bilden, in welchem die Rübe 1 mit dem umgebenden Erdreich 7 aufgenommen ist. Wie schematisch angedeutet, verjüngen sich die Polderschare in die Zeichenebene hinein (am ablaufenden Ende sind die Polderschare jeweils ca. doppelt so hoch wie am einlaufenden Ende), so daß das zwischen den Innenflächen der Schare und der Umfangsfläche der Rübe befindliche Erdreich bei der Relativbewegung zwischen Rübe und Scharen stark verdichtet wird und an der Rübe beim Verlassen der Polderschare eine unregelmäßige Schicht stark verdichteten Erdreiches anhaftet, die durch die in den Erntemaschinen vorgesehenen Reinigungsvorrichtungen nicht entfernt werden kann.

Im Gegensatz hierzu ist in Fig. 2 dargestellt, wie die stabförmigen Rodeelemente 8 und 9 nach der Erfindung zunächst mit dem unteren Endteil der Rübe in Eingriff kommen, und die

Rübe durch die Bewegung der Rodeelemente, die nach hinten und oben geneigt sind, angehoben wird, so daß die vom Erdreich gelöste Rübe zwangsläufig und in Kontakt mit den Rodeelementen 8 und 9 aus dem Erdreich herausgehoben wird. Hierbei erfolgt keine bzw. keine nennenswerte Verdichtung des Erdreiches, da das die Rüben umgebende Erdreich seitlich beliebig ausweichen kann, was im Falle der Polderschare durch die flächenhafte Begrenzung nicht möglich ist. Der geringe Anteil an Erdreich, der im Falle der Darstellung nach Fig. 2 an den Rüben anhaftet, kann auf einfache Weise durch herkömmliche, mit den Rodemaschinen gekoppelten Reinigungsvorrichtungen entfernt werden, so daß die Rübenerntemaschine relativ saubere Rüben mit einem sehr geringen Erdanteil liefert.

Die stabförmigen Rodeelemente 8 und 9 sind mit Halterungen 10 und 11 verbunden, welche über Kupplungen 12, 12 und Schraubverbindungen 13, 13 mit dem Rahmen der Rübenerntemaschine befestigt sind. Die Halterungen 10 und 11 weisen Aufnahmeelemente 14 und 15 für die Befestigungsansätze 16 und 17 der stabförmigen Rodeelemente 8, 9 auf, die von den Ansätzen 16, 17 in Abschnitte 18, 20 und weitere Abschnitte 19, 21 übergehen. Dabei sind die Stäbe der Rodeelemente 8, 9 sogebogen, daß die Abschnitte 18 und 20 in einem Winkel $\alpha$ zur horizontalen Ebene nach abwärts aufeinander zu und im Winkel $\beta$ nach vorne aufeinander zu verlaufen, während die daran anschließenden Abschnitte 19, 21 so geformt sind, daß sie nach hinten verlaufen und in einem Winkel $\gamma$ gegenüber der horizontalen Ebene ansteigen. Die Abschnitte 19 und 21 können dabei parallel zueinander verlaufen, sie können jedoch auch in einem bestimmten Winkel nach hinten auseinander oder aufeinander zu gerichtet sein; anstelle des geradlinigen Verlaufes der Abschnitte 19, 21 können diese Abschnitte wellenförmig oder in sonstiger Weise gekrümmt ausgebildet sein, wobei beispielsweise der hintere freie Teil dieser Abschnitte horizontal ausgebildet sein kann. Auch können die hinteren Enden der Abschnitte 19 und 21 entweder frei sein, d.h. keine Verbindung miteinander haben, oder aber miteinander mechanisch verbunden sein, was die Steifigkeit der Anordnung erhöht, den Übergang der Rüben in den Siebstern jedoch erschwert. Die Wahl der Winkel $\alpha$, $\beta$ und $\gamma$ hängt im wesentlichen von der Bodenbeschaffenheit und von dem zu rodenden Gut ab und ist normalerweise nicht einstellbar, so daß für unterschiedliche Winkel unterschiedliche Rodeelemente verwendet werden. Die Erfindung ist jedoch nicht auf derartige starre Winkel beschränkt; vielmehr liegt es auch im Rahmen vorliegender Erfindung, die Stabelemente so auszubilden, daß sie in ihren Neigungswinkeln verstellbar sind. Der Querschnitt der Stäbe der Rodeelemente kann entweder kreisförmig, oval, tropfenförmig, halbkreisförmig mit auflaufender Spitze oder dergl. sein; es kann jedoch auch ein quadratischer, rechteckförmiger oder dergl. Querschnitt gewählt werden. Es hat sich gezeigt, daß es zweckmäßig ist, an der unteren Begrenzung der Stäbe schneidenförmige Ansätze 22 zum Freischneiden der Restwurzeln vorzusehen; im Rahmen vorliegender Erfindung ist es aber auch möglich, derartige Ansätze über einen größeren Bereich der Stäbe vorzusehen oder die Stäbe über ihre gesamte Erstreckung mit derartigen Ansätzen zu versehen. Ferner hat es sich als zweckmäßig herausgestellt, die Stäbe mit Verstrebungen 23, 24 zu versteifen. Zur Führung der Rüben ist es auch sinnvoll, etwa parallel zu den Abschnitten 19 und 21 verlaufende Führungsstäbe an den Rodeelementen und/oder an der Halterung anzubringen, so daß die Rüben in der durch die Abschnitte 19 und 21 gebildeten Führungsrinne gehalten werden und nicht herausfallen.

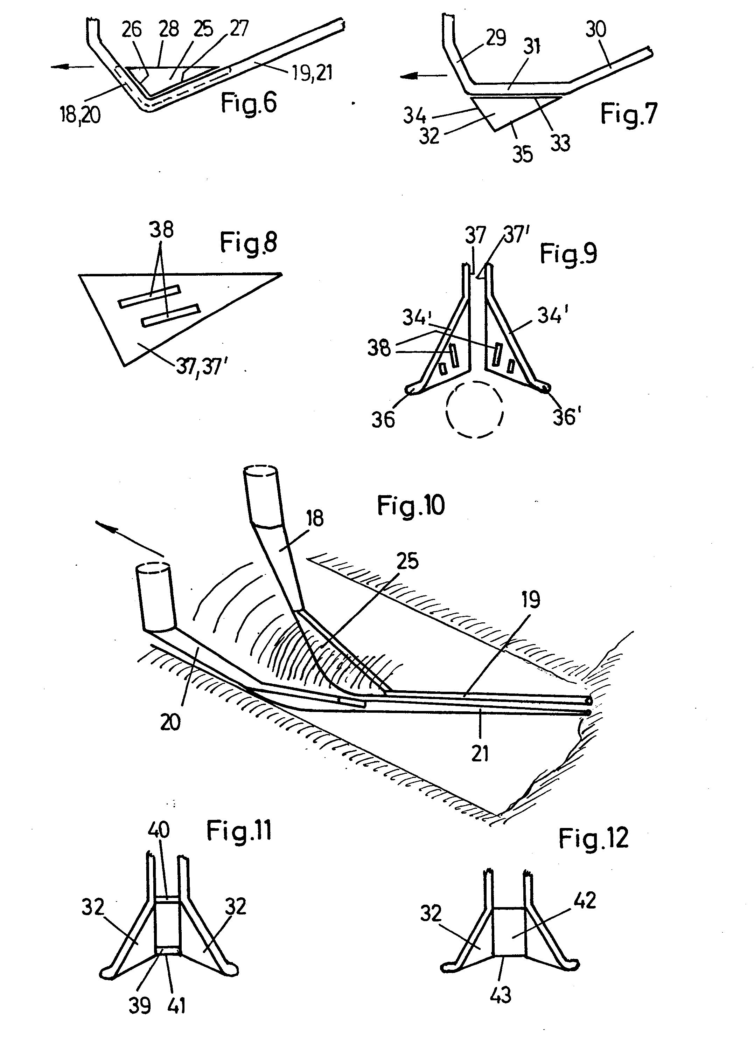

Bei der schematischen Darstellung nach Fig. 6 sind die stabförmigen Elemente 18, 19 und 20, 21 in seitlicher Ansicht dargestellt, im untersten Bereich dieser Rodeelemente ist die Druckplatte 25, die etwa dreieckförmige Gestalt aufweist, an die Stäbe angeschweißt. Dies kann so, wie voll ausgezogen oder gestrichelt dargestellt geschehen. Die Basis 28, die etwa horizontal verläuft, verbindet die Stabelemente 18 und 19 miteinander. Die Druckplatte 25 hat etwa die Gestalt eines gleichschenkeligen Dreieckes, wenn die Winkel $\alpha$ und $\gamma$ (nach Fig. 3 und 5) etwa gleichen Wert haben; die Schenkel 26 und 27 sind jedoch in jedem Falle diesen Winkeln entsprechend ausgeführt. Die obere, etwa waagerechte Begrenzung der Druckplatte 25 (bzw. des Scharbleches) ist dabei vorzugsweise nach außen gerundet, um eine Beschädigung der gerodeten Rüben zu vermeiden. Eine solche Rundung kann z.B. durch eine entsprechende Abrundung der oberen Schnittfläche, die an sich scharfkantig ist, durch Biegen der oberen Begrenzung der Platte nach außen oder entsprechende Maßnahmen erfolgen.

Während in Fig. 6 die Druckplatte 25 zwischen die beiden aneinander stoßenden Abschnitte eines jeden Stabelementes eingesetzt sind, ist bei der Ausführungsform nach Fig. 7 die Ausbildung der stabförmigen Elemente so gewählt, daß die Abschnitte 29 und 30 entsprechend den Abschnitten 18, 19 bzw. 20, 21 ausgebildet sind, zwischen diesen beiden Abschnitten 29 und 30 jedoch ein etwa waagerechter Übergangsabschnitt 31 vorgesehen ist, der die Druckplatte 32 an ihrer Basis 33 aufnimmt, während die Schenkel 34 und 35 der Druckplatte 32 in ihrem Verlauf etwa eine Fortsetzung der Abschnitte 29 und 30 bilden. Mit Pfeilrichtung ist in den Figuren 6 und 7 die Bewegungsrichtung der Rodewerkzeuge angedeutet. Insbesondere im Falle der Ausführungsform nach Fig. 7 ist die auflaufende Kante 34 der Druckplatte 32 zweckmäßigerweise als Schneide ausgebildet, um den Widerstand, den die Stirnkante der Druckplatte bei ihrer Bewegung dem Erdreich entgegensetzt, möglichst gering gehalten wird.

Die Druckplatten 25 bzw. 32 sind vorzugsweise, wie in den Figuren 8 und 9 als Druckplattenpaare 37, 37´ dargestellt, auf ihren einander zugewandten Breitflächen mit Führungsvorrichtungen 38 versehen, die in Form von Längssicken, länglichen Erhebungen oder dergl. ausgebildet sind und die in Richtung der gewünschten Bewegung der mit Hilfe der Rodeelemente aus dem Erdreich herausgehobenen Rüben verlaufen. In Fig. 9 ist weiter mit 36, 36´ angedeutet, wie die Platten 37, 37´ oder in entsprechender Weise die Platten 32 am einlaufseitigen Ende voneinander weg gebogen sind, um eine breitere Einlauföffnung für die Rüben zu erzielen.

Fig. 10 zeigt eine perspektivische Ansicht der Rodevorrichtung, bei der schematisch durch gekrümmte Linien angedeutet ist, wie der Teil des Erdreiches, durch den die Rodevorrich-

tung gezogen wird, an der Stelle der Druckplatten im untersten Abschnitt der Rodeelemente zum Aushub der Rüben verdichtet wird.

Aus Stabilitätsgründen kann es zweckmäßig sein, die beiden einander zugewandten und miteinander zusammenwirkenden Druckplatten 25 bzw. 32 bzw. 34, 34´ fest miteinander zu verbinden. Bei der schematischen Darstellung nach Fig. 11 erfolgt dies durch Querstreben 39, 40, an denen im ablaufenden Bereich die Druckplatten miteinander befestigt sind, während bei der Darstellung nach Fig. 12 anstelle zweier im Abstand voneinander angeordneter Querstreben 40, 41 ein durchgehender Boden 42 vorgesehen ist, der mit den beiden zusammenwirkenden seitlichen Druckplatten einen kurzen rinnenförmigen Kanal ausbildet, in welchem die sehr begrenzte Verdichtung des Erdreiches auftritt. Die vorderste Querstrebe 41 bzw. das vordere Ende des Bodens 42 ist dabei vorzugsweise als Messerschneide ausgebildet, um der Bewegung des Rodewerkzeuges durch das Erdreich einen möglichst geringen Widerstand entgegenzusetzen. Aufgrund dieser Schneidwirkung werden im Betrieb die Rübenwurzeln vom Rübenkörper getrennt und von der Reinigungsvorrichtung zusammen mit dem von den Rüben gelösten Erdreich abgeführt.

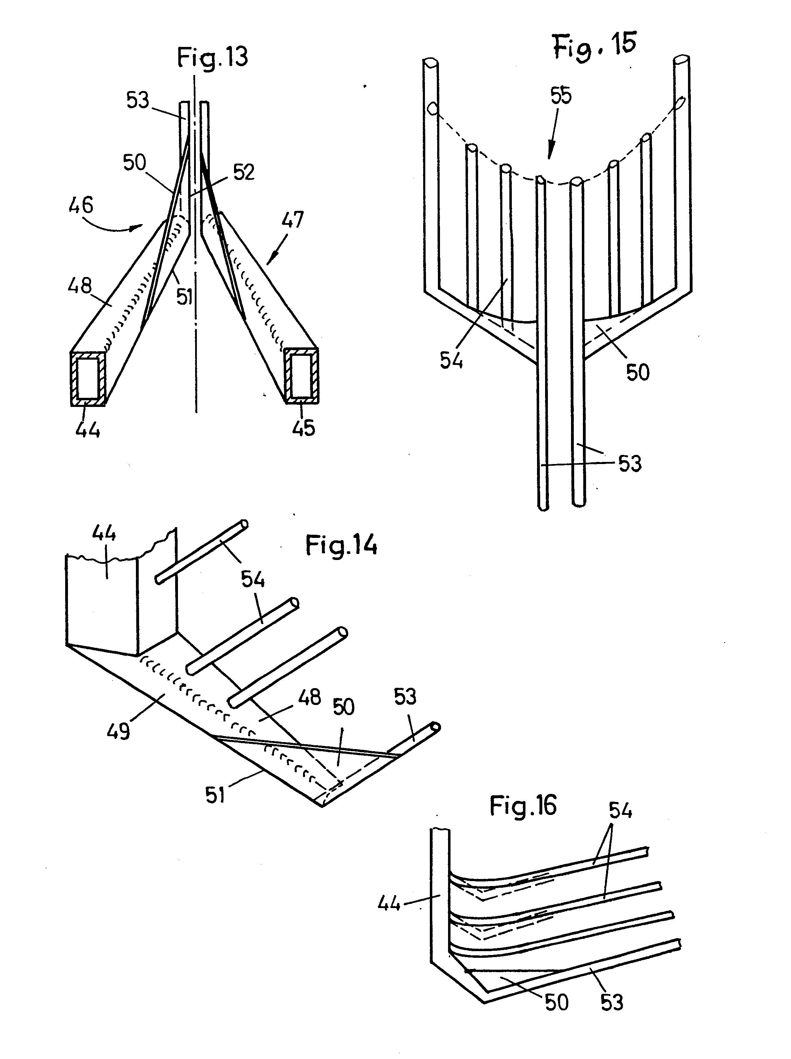

Bei der in den Figuren 13 und 14 dargestellten praktischen Ausführungsform einer Rodevorrichtung nach der Erfindung nehmen die beiden Tragstiele 44, 45, die jeweils aus einem rechteckförmigen Hohlprofilträger bestehen, die Rodeelemente 46, 47 auf, und zwar entweder mit Hilfe einer Schweiß-, Steck- oder Schraubverbindung, so daß die Rodeelemente einfach auswechselbar sind. Jedes der Rodeelemente 46 und 47 besteht aus einem Körper 48, 49 mit länglicher, geradliniger, in der Längsebene leicht gerundeter Form, wobei der Körper auch aus zwei Teilen 48 und 49 zusammengesetzt sein kann, die z.B. miteinander in Richtung der gemeinsamen Längskante verschweißt sind. Der Körper 48, 49 hat eine im Querschnitt etwa L-förmige Gestalt, wobei die beiden Schenkel nach außen leicht gerundet sind. Des weiteren verjüngt sich der Körper 48, 49 vom Tragstiel 44 weg und nimmt auf der Innenseite 49 eine Druckplatte 50 auf, die etwa in Form eines Dreieckes ausgebildet ist, das mit einem Schenkel 51 am Teil 49 aufgeschweißt ist, und dessen anderer Schenkel 52 einen Rodestab 53 aufnimmt. Die beiden Druckplatten 50, 50 der Rodeelemente sind vorzugsweise eben ausgebildet, sie können jedoch auch aufeinander zu leicht gewölbt sein. Mit 54 sind seitliche Leitstäbe zur Führung der mit Hilfe der Rodevorrichtung aus dem Erdboden gelockerten und gehobenen Rüben angedeutet. Diese Leitstäbe 54 sind so ausgebildet und angeordnet, daß sie an den beiden miteinander zusammenwirkenden Rodeelementen miteinander eine kontinuierliche Stabwanne 55 zur Führung und Weiterleitung der gerodeten Rüben ausbilden. Die einzelnen Stäbe 54 (es sind deren pro Rodeelement 46, 47 jeweils mehrere vorgesehen) sind vom Tragstiel 44 bzw. 45 weg und/oder vom Körper 48 bzw. 49 ausgehend vorzugsweise gekrümmt ausgebildet, damit sie der Form des Körpers 48, 49, der Druckplatte 50 und des Rodestabes 53 angepaßt sind; sie können statt gekrümmt auch aus zwei geradlinigen, zueinander im stumpfen Winkel verlaufenden Abschnitten bestehen, wie gestrichelt in Fig. 16 angedeutet. Die Stäbe sind ein- oder mehrteilige Einzelstäbe.

0209026

Patentansprüche:

1. Vorrichtung zum maschinellen Roden von Wurzelfrüchten, insbes. Zuckerrüben, für Rübenvollerntemaschinen, zum Einsatz zwischen Rübenköpf- und Rübenreinigungsvorrichtung, bei der ein aus zwei miteinander zusammenwirkenden, stabförmigen Rodeelementen bestehendes Rodewerkzeug pro Rübenreihe zu beiden Seiten der im Erdreich befindlichen, zu rodenden Rüben geführt wird, das die Rüben im Erdreich lockert und auf die Reinigungsvorrichtung übergibt, **dadurch gekennzeichnet,** daß die stabförmigen Rodeelemente (8,9; 18, 21) jeweils aus einem mit der Halterung (14, 15) am in Fahrtrichtung vorderen Ende befestigten, im Winkel $\alpha$ zur Horizontalen nach abwärts geneigten und im Winkel ß zur vertikalen Längsmittenebene gespreizten Abschnitt (18, 20) sowie aus einem nach hinten verlaufenden, im Winkel $\chi$ ansteigenden längeren Abschnitt (19, 21) bestehen, und daß im Bereich der tiefsten Stelle der Rodeelemente je eine in der Ebene des jeweiligen Stabelementes (18, 19; 20, 21) angeordnete, etwa dreieckförmige Druckplatte (25) bzw. ein etwa dreieckförmiges Scharblech mit dem jeweiligen Stabelement (18, 20; 19, 21) befestigt ist.

2. Vorrichtung nach Anspruch 1, dadurch gekennzeichnet, daß die Druckplatte (25) etwa die Form eines Dreieckes hat, dessen Schenkel (26, 27) durch einen Abschnitt der Stabteile (18, 20; 19, 21) gebildet sind, und dessen Basis (28) die Stabteile (18, 20; 19, 21) miteinander verbindet.

3. Vorrichtung nach Anspruch 1 oder 2, dadurch gekennzeichnet, daß die Druckplatte (25) eine Anformung der Stabelemente (18, 20; 19, 21) ist, in deren unterem Bereich die Stabelemente ineinander übergehen.

4. Vorrichtung nach einem der Ansprüche 1 - 3, dadurch gekennzeichnet, daß die Druckplatte (25) eben ausgebildet ist.

5. Vorrichtung nach einem der Ansprüche 1 - 3, dadurch gekennzeichnet, daß die beiden Druckplatten (25, 25´) der einander zugeordneten beiden Stabelemente (18, 20; 19, 21) nach außen leicht gewölbt sind.

6. Vorrichtung nach Anspruch 1, dadurch gekennzeichnet, daß die Rodeelemente (29, 30) an ihrer tiefsten Stelle einen kurzen waagerechten Abschnitt (31) aufweisen, daß jeweils die Basis (33) der etwa dreieckförmigen Druckplatte (32) mit diesem Abschnitt (31) befestigt ist, und daß die Schenkel (34, 35) der Druckplatte (32) etwa in Richtung der Stabelemente (29, 30) nach abwärts aufeinander zu verlaufen.

7. Vorrichtung nach Anspruch 6, dadurch gekennzeichnet, daß die auflaufenden Schenkel (34) der beiden einander zugeordneten Druckplatten (35) zur Verbreiterung des Rübeneinlaufes sich nach vorne und außen erweiternd (bei 36, 36´) ausgebildet sind.

8.. Vorrichtung nach einem der Ansprüche 1 - 7, dadurch gekennzeichnet, daß die Innenflächen (37, 37 ´) der Druckplatten (35 bzw. 25) mit die gerodeten Rüben führenden Vorrichtungen (38), z.B. in Form von Längssicken oder dergl. Längserhebungen, versehen sind.

9. Vorrichtung nach einem der Ansprüche 1 - 8, dadurch gekennzeichnet, daß die beiden einander zugeordneten Druckplatten (25, 32) im Bereich des von der tiefsten Stelle der Rodeelemente (18, 20; 19, 21) nach hinten ansteigenden Abschnittes fest miteinander verbunden sind.

10. Vorrichtung nach Anspruch 9, dadurch gekennzeichnet, daß die feste Verbindung in Form eines oder mehrerer Querstege (39, 40) oder wahlweise in Form eines im Bereich der Druckplatte (25; 32) durchgehenden Bodens (41) ausgebildet ist.

11. Vorrichtung nach einem der Ansprüche 9 oder 10, dadurch gekennzeichnet, daß die Vorderkante (34) der Druckplatte (35) bzw. die auflaufende Kante der festen Verbindung (39, 40 oder 41) eine in Fahrtrichtung wirkende Schneide (42) aufweist.

Fig.1

Fig.2

Fig.3

Fig.5

Fig.4

Fig.6

Fig.7

Fig.8

Fig.9

Fig.10

Fig.11

Fig.12

0209026

Fig.13

Fig.15

Fig.14

Fig.16